# EUROPÄISCHE PATENTSCHRIFT

(11) **EP 0 337 382 B1**
(45) Veröffentlichungstag und Bekanntmachung des Hinweises auf die Patenterteilung: **20.01.1993**
(21) Anmeldenummer: 89106393.5
(22) Anmeldetag: 11.04.1989
(51) Int. Cl.: B60H 1/00

(54) **Belüftungsanlage für ein Kraftfahrzeug**
Ventilation system for a motor vehicle
Système de ventilation d'un véhicule automobile

(30) Priorität: 15.04.1988 DE 3813116; 08.12.1988 DE 3841345
(43) Veröffentlichungstag der Anmeldung: 18.10.1989
(73) Patentinhaber: Behr GmbH & Co., D-70469 Stuttgart (DE); SIEMENS AKTIENGESELLSCHAFT, 80333 München (DE)
(72) Erfinder: Knöppel, Klaus-Dieter, D-7140 Ludwigsburg (DE); Ross, Reinhold, D-7141 Schwieberdingen (DE); Schramm, Michael Dipl. Ing. (FH), D-8632 Neustadt/Coburg (DE)
(74) Vertreter: Wilhelm & Dauster Patentanwälte European Patent Attorneys

(56) Entgegenhaltungen:
- EP-A- 0 149 397
- AU-B- 478 536
- FR-A- 2 080 132
- FR-A- 2 459 511
- GB-A- 1 033 175
- GB-A- 2 077 417
- US-A- 3 004 752
- PATENT ABSTRACTS OF JAPAN, Band 6, Nr. 1 (M-105)[879], 7. Januar 1982; & JP-A-56 124 511 (NIPPON RADIATOR K.K.) 30-09-1981

## Beschreibung

Die Erfindung betrifft eine Belüftungsanlage für ein Kraftfahrzeug mit innerhalb eines Gehäuses angeordneten, zur Steuerung von Luftströmen verstellbaren Luftklappen, von denen wenigstens zwei über einen Übertragungsmechanismus an eine um eine Achse drehbare Kurvenscheibe angeschlossen sind, wobei die Kurvenscheibe an einer Wandung des Gehäuses gelagert ist und wenigstens eine Führung aufweist, in der ein Führungszapfen eines Hebels des jeweiligen Übertragungsmechanismus geführt ist, wobei als Übertragunusmechanismus Hebelmechanismen vorgesehen sind, und ferner die mit den Führungszapfen versehenen Hebel ebenfalls an der Wandung des Gehäuses gelagert sind.

Lüftungsanlagen der eingangs genannten Art sind durch die AU-A 478 536 und die GB-A 1 033 175 bekannt. Durch die direkte Anordnung der Kurvenscheibe an einer Wandung des Gehäuses wird erreicht, daß nur ein Übertragungsmittel zum Verdrehen der Kurvenscheibe von dem Armaturenbrett zu dem Gehäuse geführt werden muß. Außerdem wird der Vorteil erhalten, daß das Gehäuse mit den Luftklappen und den Luftklappenantrieben fertig montiert und justiert werden können, bevor es dann als fertig montierte und justierte Baueinheit in das Fahrzeug einmontiert wird. Bei den bekannten Bauarten ist als Übertragungsmittel zum Verdrehen der Kurvenscheibe ein Bowdenzug vorgesehen, dessen Mantel an dem Gehäuse der Belüftungsanlage gehalten ist und dessen Seele mit der Kurvenscheibe verbunden ist.

Der Erfindung liegt die Aufgabe zugrunde, eine Belüftungsanlage der eingangs genannten Art so auszubilden, daß der konstruktive Aufwand weiter verringert und die Montage und die Justierung weiter erleichtert werden.

Diese Aufgabe wird dadurch gelöst, daß an die Kurvenscheibe ein Drehantrieb angeschlossen ist, der ein mit der Kurvenscheibe drehfest verbundenes Kegelrad enthält, mit dem ein an der Wandung des Gehäuses gehaltenes, mit einem Antriebselement verbindbares Kegelrad kämmt.

Dadurch wird weiter erreicht, daß der manuelle oder motorische Drehantrieb ebenfalls zu der vormontierten Baueinheit gehört. Er muß dann bei der Montage nur noch mit dem Übertragungselement verbunden werden.

Bei einer derartigen Ausgestaltung der Belüftungsanlage ist zum Antrieb der gemeinsam steuerbaren Luftklappen nur ein einziger Antriebsstrang, beispielsweise eine biegsame Welle oder ein mit einem Drehschalter gekoppelter Stellantrieb, erforderlich. Dies wird dadurch erreicht, daß die Kurvenscheibe in unmittelbarer Nähe der Luftklappen angeordnet ist, so daß diese von der Kurvenscheibe aus direkt unter Zwischenschaltung eines Hebelmechanismus steuerbar sind. Die Kurvenscheibe kann dabei - je nach Bedarf - mit einer oder mehreren offenen oder in sich geschlossenen Führungskurven versehen sein. Die Geometrie der Führungskurven ist dabei entsprechend der gewünschten Abhängigkeiten der Stellungen der Luftklappen zu wählen.

Die zur Steuerung der Hebelmechanismen eingesetzte Kurvenscheibe kann auf beiden Seiten wenigstens eine Führungskurve aufweisen, wobei jede Führungskurve mit dem Führungszapfen wenigstens eines Hebelmechanismus in Eingriff steht. Die Anzahl der jeweils vorgesehenen Führungskurven hängt dabei von der Anzahl der zu steuernden Luftklappen und der jeweils gewählten Abhängigkeit der Luftklappen voneinander ab. Für eine spezielle Ausführungsform, bei der mittels der Kurvenscheibe die drei Luftklappen zur Einstellung der Luftströme zum Fußraum und zur Mittelebene des Fahrzeuginnenraumes sowie zur Windschutzscheibe (Defrost-Düse) vorgesehen sind, hat es sich als besonders zweckmäßig erwiesen, daß jede Führungskurve der Kurvenscheibe in sich geschlossen ist und drei Führungsbereiche aufweist, die sich jeweils über einen Drehwinkel von 120° erstrecken; dabei bewirkt der eine Führungsbereich eine konstante Stellung des jeweiligen Führungszapfens und die beiden anderen Führungsbereiche bewirken eine kontinuierliche Verschiebung des jeweiligen Führungszapfens radial nach innen bzw. radial nach außen. In diesem Fall ist die gegenseitige Zuordnung der Hebelmechanismen so zu wählen, daß die drei Führungszapfen der drei Hebelmechanismen in die Führungskurve(n) um jeweils 120° versetzt zueinander eingreifen. Diese Ausgestaltung der Betätigungseinrichtung führt dazu, daß die Luftströme für die Mittelebene und den Fußraum gegenläufig gesteuert werden, daß der Luftstrom für die Defrost-Düse sowohl gegenläufig zum Luftstrom der Mittelebene als auch gegenläufig zum Luftstrom des Fußraumes gesteuert werden kann und daß es Positionen gibt, an denen jeweils der Mittelebene, dem Fußraum und der Defrost-Düse der volle Luftstrom zugeführt wird.

Zur Ansteuerung der Luftklappen mittels der Kurvenscheibe ist ein Hebelmechanismus geeignet, der aus zwei einarmigen Hebeln mit einer zwischengeschalteten Koppel besteht. Dabei ist der eine Hebel fest mit der drehbaren Luftklappe verbunden und der andere Hebel mit seinem beweglichen Ende in der Führungskurve der Kurvenscheibe geführt. Diese Art des Hebelmechanismus kann als 4-Gelenkgetriebe mit reinen Drehgelenken bezeichnet werden. Für das vorerwähnte spezielle Bewegungsprogramm von drei Luftklappen können drei gleiche geführte Hebel verwendet werden, wenn die Drehachsen dieser Hebel auf einem zur Drehachse der Kurvenscheibe konzentrischen Teilkreis angeordnet sind und hierzu die Hebel die gleiche Hebellänge aufweisen.

Zur Steuerung der Luftklappen nach dem erwähnten speziellen Bewegungsprogramm kommt aber auch ein Hebelmechanismus in Betracht, der jeweils aus einem in der Führungskurve der Kurvenscheibe geführten Schwinghebel und einem daran angelenkten, mit der jeweiligen Luftklappe verbundenen einarmigen Hebel besteht, wobei der angelenkte Hebel ein Langloch zur Führung des Schwinghebels aufweist, und bei dem die Schwinghebel zur Einstellung der Luftklappen für den Fußraum und die Defrost-Düse eine gemeinsame Drehachse haben sowie gleichartig ausgebildet und spiegelsymmetrisch angeordnet sind. Hierbei sind für jeden Hebelmechanismus nur zwei sehr einfach ausgebildete Hebelteile erforderlich.

Weitere Merkmale und Vorteile der Erfindung ergeben sich aus der nachfolgenden Beschreibung der in den Zeichnungen dargestellten Ausführungsbeispielen.
- Fig. 1: zeigt eine Belüftungsanlage mit einem Hebelmechanismus aus zwei einarmigen Hebeln mit einer zwischengeschalteten Zugstange und einer Kurvenscheibe mit einer einzigen Führungskurve,
- Fig. 2: eine Anordnung mit einem Hebelmechanismus aus einem Schwinghebel und einem angelenkten einarmigen Hebel sowie einer Kurvenscheibe mit zwei beiseitig angeordneten, gleichartigen Führungskurven,
- Fig. 3: in Form eines Diagramms das Bewegungsprogramm von drei Luftklappen,
- Fig. 4: eine Ansicht auf eine weitere Ausführungsform mit einer mittels eines Drehantriebes angetriebenen, zwei Führungskurven aufweisenden Kurvenscheibe,
- Fig. 5: einen Teilschnitt durch die Ausführungsform nach Fig. 4 in etwas anderem Maßstab,
- Fig. 6: eine Ansicht einer weiteren Ausführungsform mit in Schiebeführungen geführten Hebeln und
- Fig. 7: einen Teilschnitt entlang der Linie VII-VII der Ausführungsform nach Fig. 6.

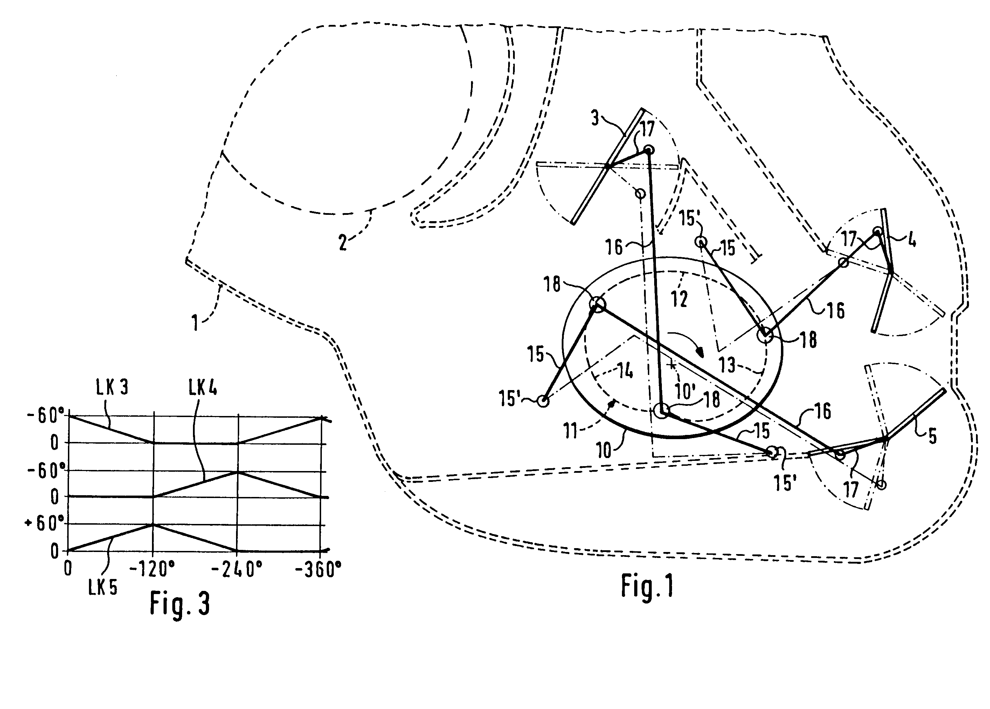

Fig. 1 zeigt die gestrichelt angedeuteten Umrisse eines Gehäuses 1 einer Belüftungsanlage, in dem ein Gebläse (2) sowie drei Luftklappen angeordnet sind. Hierbei handelt es sich um die Luftklappe (3), mit der ein Luftstrom zur Mittelebene im Armaturenbrett des Kraftfahrzeuges gesteuert wird, um die Luftklappe (4) zur Steuerung eines Luftstromes zur Defrost-Düse und um die Luftklappe (5) zur Steuerung des Luftstromes zum Fußraum. An der nicht näher bezeichneten Wandung des Gehäuses (1) ist in nicht näher dargestellter Weise direkt oder über ein an der Gehäusewandung befestigtes Halteteil die Kurvenscheibe (10) gelagert, die eine Drehachse (10′) aufweist. Die Kurvenscheibe (10) ist mit einer gestrichelt angedeuteten, in sich geschlossenen Führungskurve (11) versehen, die drei einen Winkel von jeweils 120° überstreichende Führungsabschnitte aufweist, nämlich einen Führungsabschnitt (12) mit kontinuierlichem Abstand zur Drehachse (10′), einen Führungsabschnitt (13) mit abnehmendem Abstand zur Drehachse (10) und einen Führungsabschnitt (14) mit zunehmendem Abstand zur Drehachse (10′). Die Kurvenscheibe (10) ist angetrieben, beispielsweise mittels eines Stellantriebes oder von Hand mittels einer flexiblen Welle.

Die Luftklappen (3, 4, 5) sind jeweils über einen Hebelmechanismus mit der Kurvenscheibe (10) gekoppelt. Dieser Hebelmechanismus besteht aus dem einarmigen Hebel (15), der Koppel (16) und dem einarmigen Hebel (17). Der einarmige Hebel (17) ist jeweils mit einer Luftklappe fest verbunden. Die einarmigen Hebel (15) sind mit ihrem einen Ende an der Wandung des Gehäuses (1) gelagert (ebenfalls direkt oder über ein an der Gehäusewandung befestigtes Halteteil) und mit ihrem beweglichen Ende mittels eines Führungszapfens (18) in der Führungskurve (11) geführt. Die Koppeln (16) der einzelnen Hebelmechanismen sind unterschiedlich lang. Die Hebel (15) sind gleich lang und so angeordnet, daß ihre Drehachsen (15′) auf einem zur Drehachse (10′) der Kurvenscheibe (10) konzentrisch verlaufenden Teilkreis liegen. Demzufolge greifen die Führungszapfen (18) um jeweils 120° versetzt zueinander in die Führungskurve (11) ein.

Die dargestellte Position der Kurvenscheibe (10) und der Luftklappen (3 bis 5) entspricht der einen Endstellung der Luftklappen. Bei einer Verdrehung der Kurvenscheibe um 120 oder 240° in der einen oder anderen Richtung nehmen die Luftklappen in Abhängigkeit von der Position auf der Führungskurve (11) jeweils die gestrichelt dargestellte andere Endstellung ein.

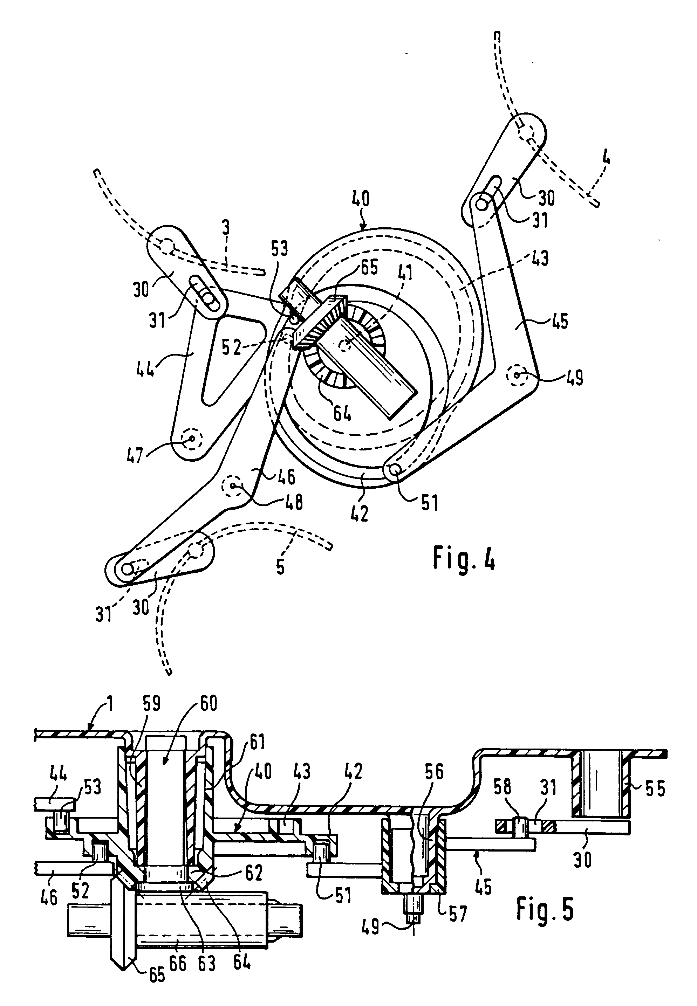

Die Kurvenscheibe (10) und die Hebelmechanismen der Luftklappen (3 bis 5) sind so aufeinander abgestimmt, daß die Luftklappen (LK) das in Fig. 3 dargestellte Bewegungsprogramm vollziehen. Die Abzisse des Diagramms zeigt den Drehwinkel der Kurvenscheibe (10) und die Koordinate die Stellung der jeweiligen Luftklappe innerhalb eines maximalen Schwenkwinkels von 60°.

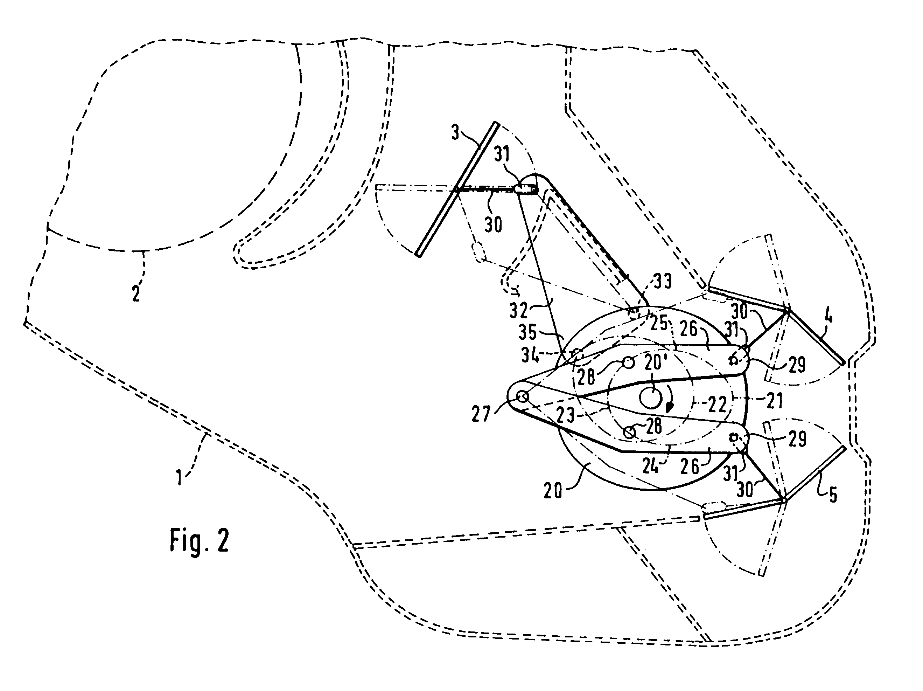

Das Ausführungsbeispiel gemäß Fig. 2 zeigt in gleicher Weise wie Fig. 1 das gestrichelt angedeutete Gehäuse (1) mit einem Gebläse (2) und den Luftklappen (3, 4, 5). Zur Betätigung der Luftklappen ist eine um die Drehachse (20′) antreibbare Kurvenscheibe (20) vorgesehen, die auf der einen Seite mit der in sich geschlossenen Führungskurve (21) und auf der anderen Seite mit der gleichen, jedoch um 120° versetzt angeordneten Führungskurve (22) versehen ist. Jede Führungskurve weist einen Führungsabschnitt (23) mit kontinuierlichem Abstand zur Drehachse (20′), einen zweiten Führungsabschnitt (24) mit zunehmendem Abstand zur Drehachse (20′) und einen dritten Führungsabschnitt (25) mit abnehmendem Abstand zur Führungsachse (20′) auf. Jeder Führungsabschnitt überstreicht einen Drehwinkel 120°.

Jede der Luftklappen (3, 4, 5) ist mit einem einarmigen Hebel (30) versehen, der an seinem beweglichen Ende ein Langloch (31) aufweist. An die Hebel (30) der Luftklappen (4, 5) ist jeweils ein Schwinghebel (26) angelenkt. Beide Schwinghebel sind um eine in oder an der Gehäusewand gelagerte gemeinsame Drehachse (27) drehbar. Zwischen der Drehachse (27) und dem beweglichen Ende jedes Schwinghebels ist etwa auf halber Länge des Schwinghebels der Führungszapfen (28) vorgesehen, der in die Führungskurve (21) eingreift. Die beiden Schwinghebel (26) sind identisch in ihrer Form und ihren Abmessungen; sie sind spiegelbildlich montiert. Zur Herstellung dieser beiden zweckmäßig aus Kunststoff bestehenden Schwinghebel ist nur ein einziges Werkzeug erforderlich.

An den Hebel (30) der Luftklappe (3) ist ein zweiarmiger Schwinghebel (32) angelenkt; die in oder an der Gehäusewand gelagerte Drehachse (33) dieses Schwinghebels liegt zwischen den beiden Enden des Schwinghebels, wobei das andere Ende (35) des Schwinghebels mit dem Führungszapfen (34) versehen ist. Der Führungszapfen (34) steht mit der Führungskurve (22) auf der anderen Seite der Kurvenscheibe (20) in Eingriff. Bei Drehung der Kurvenscheibe (20) um 360° führen die Luftklappen (LK 3, 4, 5) ebenfalls das in Fig. 3 dargestellte Bewegungsprogramm aus.

Auch bei der Ausführungsform nach Fig. 4 und 5 ist eine gemeinsame Kurvenscheibe (40) vorgesehen, die direkt an einer Wandung des Gehäuses (1) gelagert ist und die über Hebelmechanismen die drei Luftklappen (3, 4, 5) antreibt. Die Kurvenscheibe (40), die um eine Achse (41) verdrehbar gelagert ist, besitzt auf ihrer Oberseite und auf ihrer Unterseite jeweils eine Führungskurve (42, 43) in Form von umlaufenden Nuten. In die der Wandung des Gehäuses (1) zugewandte Führungskurve (43) greift ein Zapfen (53) eines Übertragungshebels (44) ein, der um eine Achse (47) schwenkbar an der Wandung des Gehäuses (1) gelagert ist. Der Übertragungshebel (44) ist über ein Langloch (31) an einen Hebel (30) angelenkt, der drehfest mit einer Welle oder einem Wellenstummel der Luftklappe (3) verbunden ist.

In die der Wandung des Gehäuses (1) abgewandte Führungskurve (42) greift ein Zapfen (51) eines Übertragungshebels (45) ein, der um eine Achse (49) verschwenkbar an der Wandung des Gehäuses (1) gelagert ist. Dieser Übertragungshebel (45) ist über ein Langloch (31) an einen Hebel (30) angelenkt, der drehfest mit der Luftklappe (4) verbunden ist. In die Führungskurve (42) greift weiter ein Führungszapfen (52) eines Übertragungshebels (46) ein, der um eine Achse (48) verschwenkbar an der Wandung des Gehäuses (1) gelagert ist. Dieser Übertragungshebel (46) ist über ein Langloch an einen Hebel (30) angelenkt, der drehfest mit der Luftklappe (5) verbunden ist. Der Verlauf der Führungskurven (42, 53) bestimmt das Bewegungsprogramm der Luftklappen (3, 4, 5), das diese bei einer Verdrehung der Kurvenscheibe (40) ausführen. Dabei kann ein Bewegungsprogramm entsprechend Fig. 3 oder auch ein davon abweichendes Bewegungsprogramm durch entsprechende Festlegung der Führungskurven (42, 43) bestimmt werden. Da die Führungskurven (42, 43) endlos umlaufen, kann die Kurvenscheibe (40) um 360° gedreht werden.

Die Luftklappen (3, 4, 5) sind mit Wellen oder Wellenzapfen versehen, die in an die Wandung des Gehäuses (1) angeformten Lageraufnahmen (55) in nicht näher dargestellter Weise gelagert sind. Die Hebel (30) sind mit den Wellen oder Wellenstummeln der Luftklappen (3, 4, 5) drehfest verbunden, wozu diese Wellen oder Wellenstummel an ihrem Ende mit einem Profil, beispielsweise einem Vierkantprofil versehen sind, auf die die Hebel (30) mit einer entsprechenden Aussparung aufgesteckt sind.

Die Hebel (44, 45, 46) sind ebenfalls direkt an der Wandung des Gehäuses (1) in einer Weise gelagert, wie sie in Fig. 5 für den Hebel (45) näher dargestellt ist. An die Wandung des Gehäuses (1) sind Lagerzapfen (56) angeformt, auf die eine Lagerhülse (57) des jeweiligen Hebels aufgesteckt ist. Die Lagerhülse (57) wird an dem Lagerzapfen (56) in nicht näher dargestellter Weise axial gesichert, insbesondere mittels einer Clipsverbindung. In axialer Richtung sind die Lagerhülse (57) und der Lagerzapfen (56) mittels Ringschultern gegeneinander fixiert. An der Lagerhülse (57) ist ein Hebelarm mit dem in die Führungskurve (42) eingreifenden Führungszapfen (51) und ein Hebelarm mit einem in das Langloch (31) des Hebels (30) eingreifenden Zapfen (58) angebracht.

Zur Aufnahme der Kurvenscheibe (40) ist ebenfalls an die Wandung des Gehäuses (1) ein Lagerzapfen (59) angeformt. In diesen Lagerzapfen (59) ist ein Lagerbolzen (60) eingesetzt, der einen profilierten Schaft, beispielsweise einen Vierkant aufweist, dem die Innenkontur des Lagerzapfens (59) angepaßt ist. Dadurch ist der Lagerbolzen (60) nur in einer vorbestimmten Winkelstellung an dem Gehäuse (1) montierbar. Der Lagerbolzen (60) stützt sich mit einer Ringschulter außen an dem Lagerzapfen (59) ab und ist in axialer Richtung innen mittels einer Clipsverbindung oder einer Schraubverbindung o.dgl. fixiert. Die Kurvenscheibe (40) ist einteilig mit einer Lagerhülse (61) ausgeführt, mit der sie auf den Lagerzapfen (59) aufgesteckt ist. Sie ist in radialer Richtung mit ihrem der Wandung des Gehäuses (1) zugewandten Rand auf einem ringbundartigen Ansatz des Lagerzapfens (59) geführt. Ferner ist die Lagerhülse (61) der Kurvenscheibe (40) an ihrem gegenüberliegenden Rand mit einem Ringbund (62) versehen, mit dem sie auf einem entsprechenden Ringbund des Lagerbolzens (60) radial gelagert ist. Der Ringbund (62) der Lagerhülse (61) der Kurvenscheibe (40) ist in axialer Richtung zwischen dem Ende des Lagerzapfens (59) und einer Ringschulter (63) des Lagerbolzens (60) gehalten.

Der Antrieb der Kurvenscheibe (40) erfolgt über ein Kegelradgetriebe.Hierzu ist der der Wandung des Gehäuses (1) abgewandte Rand der Lagerhülse (61) als ein Kegelrad (64) ausgebildet. Mit dem Kegelrad (64) der Kurvenscheibe (40) kämmt ein Kegelrad (65), das in einem an den Lagerbolzen (60) angeformten Lagergehäuse (66) gelagert ist. Das Kegelrad (65) ist drehfest auf einer Welle (67) angeordnet, an die über eine Kupplungsverbindung eine Antriebswelle angeschlossen werden kann, beispielsweise eine biegsame Welle, die in nicht näher dargestellter Weise bis zu einem im Armaturenbrett des betreffenden Fahrzeugs angeordneten Antriebselement geführt ist. Da die Kurvenscheibe (40) mit ihrem Kegelrad (64) auf dem Lagerbolzen (60) gelagert ist, der das Lagergehäuse (66) und damit das Kegelrad (65) trägt, ist eine exakte Zuordnung der Kegelräder (64, 65) gewährleistet.

Insgesamt ergibt sich eine einfache und preiswert herzustellende Konstruktion, da die Wandung des Gehäuses (1) mit der Lageraufnahme (55), den Lagerzapfen (56) und dem Lagerzapfen (59) sowie die Übertragungshebel (44, 45, 46) mit den angeformten Lagerhülsen (57) und auch die Kurvenscheibe (40) mit dem angeformten Kegelrad (64) sowie der Lagerbolzen (60) mit dem Lagergehäuse (66) als Kunststofformteile hergestellt sind. Außer dieser relativ einfachen Herstellung und der ebenso einfachen Montage ergibt sich der besondere Vorteil, daß das Gehäuse (1) mit den Klappen (3, 4, 5), der Kurvenscheibe (40) und dem Kegelradantrieb (64, 65) sowie mit den Übertragungshebeln (44, 45, 46) als Baueinheit vormontiert werden kann, die dann als solche in ein Kraftfahrzeug eingebaut wird. Dadurch ist es in einfacher Weise möglich, eine exakte Justierung und Zuordnung der Stellungen der einzelnen Luftklappen (3, 4, 5) zueinander und auch zu dem nicht dargestellten Antriebselement herzustellen.

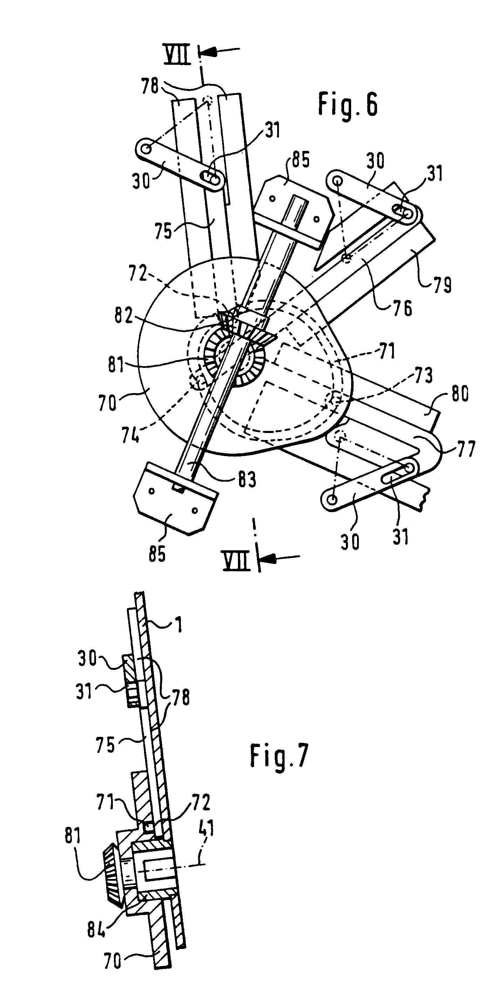

Bei der Ausführungsform nach Fig. 6 und 7 ist die Kurvenscheibe (70) auf ihrer einer Wand des Gehäuses (1) zugewandten Seite mit einer als Steuerkurve ausgebildeten Führung (71) versehen, die als eine umlaufende Nut ausgebildet ist. In diese Führung (71) ragen Führungszapfen (72, 73, 74) hinein, die an Hebeln (75, 76, 77) angebracht sind, die jeweils in an der Wandung des Gehäuses (1) angebrachten Schiebeführungen (78, 79, 80) geführt sind und somit von der Kurvenscheibe (70) zu linearen Bewegungen angetrieben werden. Die Hebel (75, 76, 77) sind jeweils über Bolzen an Hebel (30) angelenkt, die drehfest auf den Wellen der Klappen (3, 4, 5) angeordnet sind. Diese Hebel (30) weisen jeweils ein sich in ihrer Längsrichtung erstreckendes Langloch (31) auf, in welchem die Bolzen geführt sind.

Bei der Ausführungsform nach Fig. 6 und 7 ist eine gemeinsame Führung (71) auf der dem Gehäuse (1) zugewandten Unterseite der Kurvenscheibe (70) vorgesehen, in welche die Führungszapfen (72, 73, 74) aller Hebel (75, 76, 77) eingreifen. Es ist jedoch ohne weiteres möglich, zwei oder mehr Führungen in der Kurvenscheibe (74) vorzusehen, so daß einer oder allen Klappen (3, 4, 5) eigene Führungen zugeordnet werden. Diese Führungen können dann sowohl auf der Oberseite als auch auf der Unterseite der Kurvenscheibe (70) angebracht werden. Außerdem ist es möglich, den Außenumfang der Kurvenscheibe (70) als Führung zu verwenden und dann vorzusehen, daß der betreffende Hebel (75, 76 oder 77) mittels einer Feder in Richtung zu dem Außenumfang der Kurvenscheibe (70) belastet wird.

Die Kurvenscheibe (70) ist auf einer Lagerhülse (84) an der Außenseite des Gehäuses (1) gelagert (Fig. 3). Sie ist drehfest mit einem Kegelrad (81) verbunden, das mit einem Kegelrad (82) kämmt. Das Kegelrad (82) ist auf einer Welle (83) drehfest angeordnet, die in zwei auf der Außenseite des Gehäuses (1) angebrachten Laschen (85) gelagert ist. Ein Ende dieser Welle (83) ist als ein Anschluß ausgebildet, beispielsweise als eine profilierte Aufnahme, in welche ein Gegenstück einer biegsamen Welle oder eines sonstigen Antriebes eingesteckt wird.

## Patentansprüche

1. Belüftungsanlage für ein Kraftfahrzeug mit innerhalb eines Gehäuses (1) angeordneten, zur Steuerung von Luftströmen verstellbaren Luftklappen (3, 4, 5), von denen wenigstens zwei über einen Übertragungsmechanismus an eine um eine Achse drehbare Kurvenscheibe (10, 20, 40, 70) angeschlossen sind, wobei die Kurvenscheibe an einer Wandung des Gehäuses gelagert ist und wenigstens eine Führung aufweist, in der ein Führungszapfen (18, 28, 34, 51, 52, 53, 72, 73,74) eines Hebels (15, 16, 26, 44, 45, 46, 75,76,77) des jeweiligen Übertragungsmechanismus geführt ist, wobei als Übertragungsmechanismus Hebelmechanismen vorgesehen sind, und ferner die mit dem Führungszapfen versehenen Hebel ebenfalls an der Wandung des Gehäuses gelagert sind, dadurch gekennzeichnet, daß an die Kurvenscheibe (10, 20, 40, 70) ein Drehantrieb (64, 65, 81, 82) angeschlossen ist, der ein mit der Kurvenscheibe drehfest verbundenes Kegelrad (64, 81) enthält, mit dem ein an der Wandung des Gehäuses gehaltenes, mit einem Antriebselement verbindbares Kegelrad (65, 83) kämmt.

2. Belüftungsanlage nach Anspruch 1, dadurch gekennzeichnet, daß die Kurvenscheibe (20; 40) auf beiden Seiten wenigstens eine Führungskurve (21, 22; 42, 43) aufweist und daß jede Führungskurve (21, 22; 42, 43) mit dem Führungszapfen (28, 34; 51, 52, 53) wenigstens eines Hebelmechanismus im Eingriff steht.

3. Belüftungsanlage nach einem der Ansprüche 1 bis 2, dadurch gekennzeichnet, daß die Kurvenscheibe (10; 20; 40; 70) mit in sich geschlossenen, sich über 360° erstreckende Führungskurven (11; 21, 22; 42, 43; 71) versehen ist.

4. Belüftungsanlage nach einem der Ansprüche 1 bis 3, dadurch gekennzeichnet, daß jede Führungskurve (11, 21, 22; 42, 43; 71) wenigstens zwei Führungsbereiche aufweist, von denen eine eine kontinuierliche Verschiebung eines Führungszapfens (18; 28, 34; 51, 52, 53; 72, 73, 74) radial nach innen und der andere eine kontinuierliche Verschiebung radial nach außen bezüglich der Drehachse (41) der Kurvenscheibe (10; 20; 40; 70) bewirken.

5. Belüftungsanlage nach einem der Ansprüche 1 bis 4, dadurch gekennzeichnet, daß wenigstens eine Führungskurve (11; 21, 22; 42, 43; 71) einen Abschnitt mit konstantem Abstand zur Drehachse der Kurvenscheibe (10; 20; 40; 70) aufweist.

6. Belüftungsanlage nach einem der Ansprüche 1 bis 5, dadurch gekennzeichnet, daß jeder Hebelmechanismus aus zwei einarmigen Hebeln (15, 17) mit einer zwischengeschalteten Koppel (16) besteht.

7. Belüftungsanlage nach einem der Ansprüche 1 bis 5, dadurch gekennzeichnet, daß die Drehachsen (15′) der geführten Hebel (15) auf einem zur Drehachse (10′) der Kurvenscheibe (10) konzentrischen Teilkreis angeordnet sind und daß die geführten Hebel (15) die gleiche Hebellänge aufweisen.

8. Belüftungsanlage nach einem der Ansprüche 1 bis 5, dadurch gekennzeichnet, daß jeder Hebelmechanismus aus einem in der Führungskurve (21, 22; 42, 43; 71) geführten Hebel (26, 32; 44, 45, 46; 75, 76, 77) und einem daran angelenkten, mit der jeweiligen Luftklappe (3, 4, 5) verbundenen einarmigen Hebel (30) besteht, wobei der angelenkte Hebel ein Langloch (31) zur Führung des Hebels (26, 32; 44, 45, 46; 75, 76, 77) aufweist.

9. Vorrichtung nach einem der Ansprüche 1 bis 5 und 8, dadurch gekennzeichnet, daß an der Wandung des Gehäuses (1) in Linearführungen (78, 79, 80) geführte Hebel (75, 76, 77) angeordnet sind, die jeweils mit einem Führungszapfen (72, 73, 74) in oder an einer Führung (71) der Kurvenscheibe (70) geführt sind.

## Claims

1. A ventilation system for a motor vehicle and comprising, disposed inside a housing (1) and adjustable in order to control air flows, ventilation flaps (3, 4, 5) of which at least two are connected via a transmission mechanism to a cam plate (10, 20, 40, 70) rotatable about a spindle, the cam plate being mounted on a wall of the housing and having at least one guide in which a guide journal (18, 28, 34, 51, 52, 53, 72, 73, 74) of a lever (15, 16, 26, 44, 45, 75, 76, 77) of the relevant transmission mechanism is guided, lever mechanisms being provided as the transmission mechanism, and furthermore the levers provided with the guide journal are likewise mounted on the wall of the housing, characterised in that connected to the cam plate (10, 20, 40, 70) is a rotary drive (64, 65, 81, 82) comprising a bevel gear (64, 81) rotationally rigidly connected to the cam plate and meshing with a bevel gear (65, 83) mounted on the wall of the housing and adapted to be connected to a drive element.

2. A ventilation system according to claim 1, characterised in that the cam plate (20; 40) has on both sides at least one guide cam (21, 22; 42, 43) and in that each guide cam (21, 22; 42, 43) is in engagement with the guide journal (28, 34; 51, 52, 53) of at least one lever mechanism.

3. A ventilation system according to one of claims 1 to 2, characterised in that the cam plate (10; 20; 40; 70) is provided with guide cams (11; 21, 22; 42, 43; 71) extending over 360° and closed in themselves.

4. A ventilation system according to one of claims 1 to 3, characterised in that each guide cam (11, 21, 22; 42, 43; 71) comprises at least two guide zones one of which produces a continuous displacement of a guide journal (18; 28, 34; 51, 52, 53; 72, 73, 74) radially inwardly while the other produces a continuous displacement radially outwardly in relation to the axis of rotation (41) of the cam plate (10; 20; 40; 70).

5. A ventilation system according to one of claims 1 to 4, characterised in that at least one guide cam (11; 21, 22; 42, 43; 71) has a portion which is at a constant distance from the axis of rotation of the cam plate (10; 20; 40; 70).

6. A ventilation system according to one of claims 1 to 5, characterised in that each lever mechanism consists of two single-armed levers (15, 17) with an interposed link (16).

7. A ventilation system according to one of claims 1 to 5, characterised in that the axes of rotation (15') of the guided levers (15) are disposed on a reference circle concentric with the axis of rotation (10') of the cam plate (10) and in that the guided levers (15) have the same lever length.

8. A ventilation system according to one of claims 1 to 5, characterised in that each lever mechanism consists of a lever (26, 32; 44, 45, 46; 75, 76, 77) guided in the guide cam (21, 22; 42, 43; 71) and, articulated thereon and connected to the relevant air flap (3, 4, 5), a single-armed lever (30), the articulated lever comprising an elongated hole (31) for guiding the lever (26, 32; 44, 45, 46; 75, 76, 77).

9. An apparatus according to one of claims 1 to 5 and 8, characterised in that levers (75, 76, 77) guided in linear guides (78, 79, 80) are disposed on the wall of the housing (1) and each has a guide journal (72, 73, 74) by which it is guided in or on a guide (71) on the cam plate (70).

## Revendications

1. Installation de ventilation pour un véhicule automobile, comportant des registres d'air (3, 4, 5) disposés à l'intérieur d'un carter (1), manoeuvrables pour la commande des écoulements d'air et dont au moins deux sont reliés, par l'intermédiaire d'un mécanisme de transmission, avec un disque formant came (10, 20, 40, 70) pouvant tourner autour d'un axe, ce disque étant monté sur une paroi du carter et comportant au moins un guide dans lequel est guidé un têton de guidage (18, 28, 34, 51, 52, 53, 72, 73, 74) d'un levier (15, 16, 26, 44, 45, 46, 75, 76, 77) du mécanisme de transmission correspondant, et à cet égard comme mécanisme de transmission il est prévu des mécanismes à leviers et en outre, les leviers pourvus du têton de guidage sont également montés sur la paroi du carter, caractérisée en ce que le disque formant came (10, 20, 40, 70) est relié à un entraînement en rotation (64, 65, 81, 82), qui comporte un pignon conique (64, 81) relié sans possibilité de rotation relative au disque formant came et avec lequel est en prise un pignon conique (65, 83) maintenu sur la paroi du carter et pouvant être relié à un élément d'entraînement.

2. Installation de ventilation selon la revendication 1, caractérisée en ce que le disque formant came (20 ; 40) comporte sur deux côtés au moins une came de guidage (21, 22 ; 42, 43) et en ce que chaque came de guidage (21, 22 ; 42, 43) est en prise avec le têton de guidage (28, 34 ; 52, 53) d'au moins un mécanisme à levier.

3. Installation de ventilation selon une des revendications 1 et 2, caractérisée en ce que le disque formant came (10; 20; 40; 70) est pourvu de cames de guidage (11; 21; 22; 42; 43; 71) intrinsèquement fermées et s'étendant sur 360°.

4. Installation de ventilation selon une des revendications 1 à 3, caractérisée en ce que chaque came de guidage (11, 21, 22 ; 42, 43 ; 71) comporte au moins deux zones de guidage dont une assure une translation continue d'un têton de guidage (18 ; 28, 34 ; 51, 52, 53 ; 72, 73, 74) radialement vers l'intérieur, et l'autre assure une translation continue radialement vers l'extérieur, par rapport à l'axe de rotation (41) du disque formant came (10 ; 20 ; 40 ; 70).

5. Installation de ventilation selon une des revendications 1 à 4, caractérisée en ce qu'au moins une came de guidage (11 ; 21, 22 ; 42, 43; 71) comporte une partie ayant un espacement constant par rapport à l'axe de rotation du disque formant came (10; 20; 40; 70).

6. Installation de ventilation selon une des revendications 1 à 5, caractérisée en ce que chaque mécanisme à leviers se compose de deux leviers à un bras (15, 17) entre lesquels est disposé un organe d'accouplement (16).

7. Installation de ventilation selon une des revendications 1 à 5, caractérisée en ce que les axes de rotation (15') des leviers guidés (15) sont disposés sur une partie de cercle concentrique à l'axe de rotation (10') du disque formant came (10) et en ce que les leviers guidés (15) ont la même longueur.

8. Installation de ventilation selon une des revendications 1 à 5, caractérisée en ce que chaque mécanisme à leviers se compose d'un levier (26, 32 ; 44, 45, 46 ; 75, 76, 77) guidé dans une des cames de guidage (21, 22 ; 42, 43 ; 71) et d'un levier à un bras (30) relié au registre d'air correspondant (3, 4, 5), le levier articulé comportant un trou oblong (31) pour le guidage du levier (26, 32 ; 44, 45, 46 ; 75, 76, 77).

9. Installation selon une des revendications 1 à 5 et 8, caractérisée en ce que sur la paroi du carter (1) sont disposés des leviers (75, 76 77), guidés dans des guides linéaires (78, 79, 80) et dont le guidage est respectivement assuré par un têton de guidage (72, 73, 74) dans ou sur un guide (71) du disque formant came (70).
